# EUROPEAN PATENT SPECIFICATION

(11) **EP 3 835 703 B1**
(45) Date of publication and mention of the grant of the patent: **22.04.2026**
(21) Application number: 20213561.2
(22) Date of filing: 11.12.2020
(51) Int. Cl.: F28F 7/02

(54) **REPRESENTATIVE VOLUME ELEMENTS FOR HEAT EXCHANGERS WITH FLOW AREA CONTROL**
REPRÄSENTATIVE VOLUMENELEMENTE FÜR WÄRMETAUSCHER MIT STEUERUNG DES DURCHFLUSSBEREICHS
ÉLÉMENTS VOLUMIQUES REPRÉSENTATIFS POUR ÉCHANGEURS DE CHALEUR AVEC COMMANDE DE ZONE D'ÉCOULEMENT

(30) Priority: 13.12.2019 US 201916714275
(43) Date of publication of application: 16.06.2021
(73) Proprietor: RTX Corporation, Farmington, CT 06032 (US)
(72) Inventor: WIEDENHOEFER, James F., Windsor, CT Connecticut 06095 (US); SNYDER, Jacob C., Manchester, CT Connecticut 06040 (US)
(74) Representative: Dehns

(56) References cited:
- US-A1- 2008 149 299
- ORAIB AL-KETAN ET AL: "Multifunctional Mechanical Metamaterials Based on Triply Periodic Minimal Surface Lattices", ADVANCE ENGINEERING MATERIALS, vol. 21, no. 10, 20 August 2019 (2019-08-20), DE, pages 1900524, XP055759109, ISSN: 1438-1656, DOI: 10.1002/adem.201900524
- JOSHUAH K STOLAROFF: "LLNL-PRES-XXXXX FEW0225: High-efficiency, integrated reactors for sorbents, solvents, and membranes using additive manufacturing", 13 August 2018 (2018-08-13), XP055749802, Retrieved from the Internet <URL:https://netl.doe.gov/sites/default/files/netl-file/J-Stolaroff-LLNL-Reactor-Additive-Manufacturing.pdf>

## Description

### BACKGROUND

This disclosure relates generally to component volumes partitioned by representative volume elements (RVEs) that define unequal cross-sectional flow areas, and more particularly to forming a heat exchanger core formed by representative volume elements (RVEs) in which the RVEs define different cross-sectional flow areas expressed as an area ratio. Specifically, the invention relates to a system as defined in the preamble of claim 1, and as illustrated in US2008/0149299.

Heat exchanger design often seeks to maximize the transmission of heat flux from one fluid to another or among multiple fluids within the heat exchanger core. To this end, many heat exchanger designs increase the surface area in contact between fluids within the heat exchanger core. Heat exchanger core designs having a relatively high surface area to volume ratio, or heat exchanger density, are referred to as compact heat exchangers. While large surface areas in compact heat exchangers increase heat transfer efficiency, the resulting relatively small fluid passage size is more susceptible to fouling and high pressure losses, which can be undesirable in some applications.

Recent attempts to address these disadvantages include forming heat exchanger cores by replicating representative volume elements (RVE), also known as representative elementary volumes (REV), within the core volume of heat exchangers. A representative volume element (RVE) or representative elementary volume (REV) is the smallest unit volume representation of a more complicated geometry. For periodic structures and materials, the RVE is the smallest unit volume that can be replicated in at least one direction of three-dimensional space to produce the overall structure. RVEs that can be replicated in three orthogonal directions are termed triply periodic structures. Some of these triply periodic RVE structures produce dissimilar boundary faces and require a particular orientation, or crystalline structure, with respect to the adjacent RVEs to form a unitary structure. Other RVEs have identical boundary faces, permitting the RVE to be rotated with respect to the adjacent RVEs while maintaining a unitary structure otherwise known as orientation independent structures.

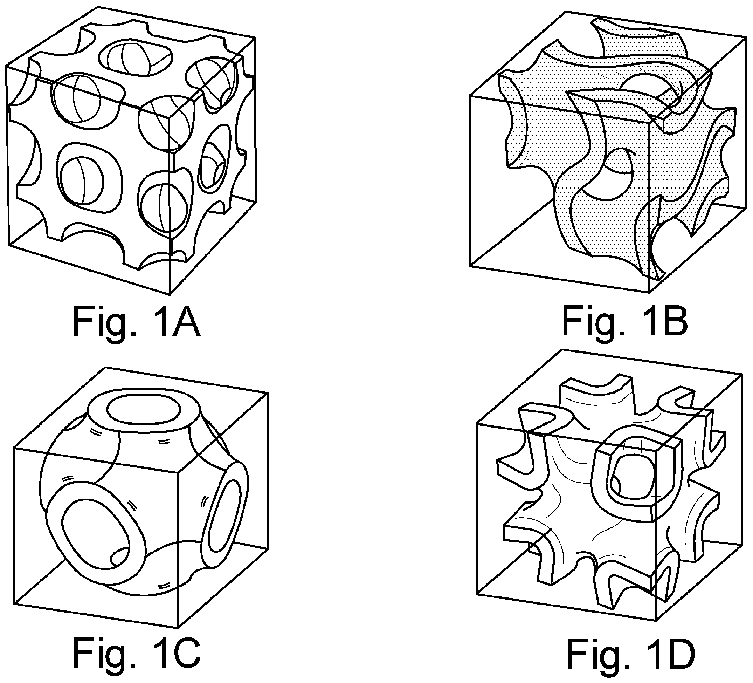

In some applications, RVE geometry utilizes, or is derived from, a minimal surface. Minimal surfaces are surfaces with a minimized local area. In other words, a minimal surface is a surface that has the smallest possible surface area for a given boundary. Additionally, minimal surfaces have a zero mean curvature, i.e., the sum of the principle curvatures at each point is zero. One subset of such RVEs are triply periodic minimal surfaces (TPMS) that are RVEs in which the dividing surface is a minimal surface that produces a triply periodic unit structure. Examples of triply periodic unit structures based on TPMS surfaces include the structures based on Schwarz-D, Schoen-G, Schwarz-P, and Schoen IWP surfaces (depicted by FIGs. 1A, 1B, 1C, and 1D, respectively) known in the art, each structure being based on a thickened minimal surface.

While RVEs have improved fouling performance and reduced pressure loses in compact heat exchangers, conventional RVE configurations, such as those based on a thickened minimal surface, produce equal cross-sectional flow areas. However, in some heat exchanger applications, heat exchanger efficiency can be improved by biasing the cross-sectional flow area between two fluid paths, or among multiple fluid paths. As such, a need exists for producing RVE-based components and, in particular, heat exchanger cores with unequal RVE divisions and unequal cross-sectional flow area divisions.

### SUMMARY

From one aspect, the present invention provides a system according to claim 1.

Features of embodiments are recited in the dependent claims.

### BRIEF DESCRIPTION OF THE DRAWINGS

FIG. 1A is an isometric view of a representative volume element (RVE) having a dividing structure based on a Schwarz-D surface.
FIG. 1B is an isometric view of a representative volume element (RVE) having a dividing structure based on a Schoen-G surface.
FIG. 1C is an isometric view of a representative volume element (RVE) having a dividing structure based on a Schwarz-P surface.
FIG. 1D is an isometric view of a representative volume element (RVE) having a dividing structure based on a Schoen IWP surface.
FIG. 2A is an isometric view of a representative volume element (RVE), falling outside the wording of the claims, having a dividing structure based on a Schwarz-D surface but is offset within the RVE to define two regions with unequal cross-sectional flow areas.
FIG. 2B is an enlarged isometric view of zone A depicted in FIG. 2A.
FIGs. 2C and 2D are isometric views of each of the regions defined by the RVE depicted in FIG. 2A.
FIG. 3A is an isometric view of a representative volume element (RVE), falling outside the wording of the claims, having two dividing structures based on a Schwarz-D surface except each structure is offset by a different amount within the RVE relative to the Schwarz-D surface to define three discrete regions of unequal cross-sectional flow areas.
FIG. 3B is an enlarged isometric view of zone B depicted in FIG. 3A.
FIGs. 3C, 3D, and 3E are isometric views of each of the regions defined by the RVE depicted in FIG. 3A.
FIG. 4 is a schematic view of a representative volume element (RVE), in accordance with the invention, having three dividing structures based on a Schwarz-D surface except each structure is offset by a different amount within the RVE relative to the Schwarz-D surface to define four discrete regions.
FIG. 5A is a schematic view of an exemplary system, falling outside the wording of the claims, implementing a heat exchanger core formed by a plurality of RVEs depicted by FIGs. 2A-2D.
FIG. 5B is a schematic view of an exemplary system, falling outside the wording of the claims, implementing a heat exchanger core formed by a plurality of RVEs depicted by FIGs. 3A-3E.
FIG. 5C is a schematic view of an exemplary system, in accordance with the invention, implementing a heat exchanger core formed by a plurality of RVEs depicted by FIG. 4.
FIG. 6 is a flow chart describing steps for forming a component comprising a plurality of RVEs.

### DETAILED DESCRIPTION

As disclosed herein are components formed by representative volume elements (RVEs) characterized by discrete regions having unequal cross-sectional flow areas. Each representative volume element includes at least one dividing structure bound by two surfaces, each surface offset from opposite sides of a parting surface. The parting surface is a surface defined in three-dimensional space by a mathematical expression that equals a constant. Further, the selected mathematical expression is one that defines a triply periodic surface, or a triply periodic minimal surface (TPMS), when the expression equals zero. When the mathematic expression of the parting surface equals zero, the dividing structure bound by surfaces offset from the parting surface has a shape and contour that is similar to the parting surface and bounds discrete regions of equal volume and equal cross-sectional flow area of the RVE. However, in other embodiments, the mathematical expression equals a non-zero constant to offset the parting surface within the RVE such that the dividing structure bounds discrete regions of unequal volume and unequal cross-sectional flow area of the RVE.

Additional dividing structures can be added to the RVE to create additional discrete regions within the RVE, each additional dividing structure defined in a similar manner to the first dividing structure. As a result, the RVE can include one or more dividing structures that partition the RVE into multiple discrete regions and cross-sectional flow areas, the proportions of which can be varied by selecting different constants that equal the mathematical expression. When such components are used to construct heat exchanger cores, the fluid paths can be tailored to application-specific requirements of the heat exchanger. For instance, using RVE with unequal cross-sectional flow areas, the cross-sectional flow area ratio between two fluid paths can be tailored to account for differences in fluid viscosity, flow rate, temperature, pressure, and the like, and to improve heat exchanger efficiency.

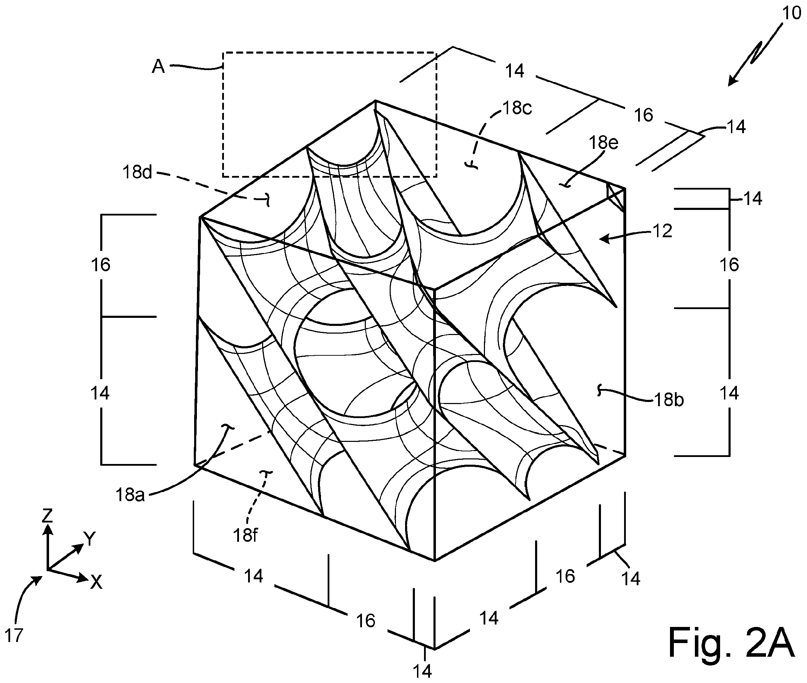

FIG. 2A is an isometric view of representative volume element (RVE) 10 that includes dividing structure 12. Dividing structure 12 extends within RVE 10 to divide the internal volume of RVE 10 into two discrete regions 14 and 16 as noted along boundary faces 18a, 18b, 18c, 18d, 18e, and 18f, which enclose RVE 10. Region 14 defines a flow path within RVE 10 that does not fluidly communicate with region 16. That is to say, fluid flowing through region 14 does not mix with fluid flowing within region 16.

Further, dividing structure 12 is a triply periodic structure such that RVE 10 can be replicated along mutually orthogonal X, Y, and Z axes of coordinate system 17 to form a component. As depicted in FIG. 2A, the X-axis of coordinate system 17 is normal to boundary surfaces 18b and 18d. The Y-axis of coordinate system 17 is normal to boundary surfaces 18a and 18c, and the Z-axis of coordinate system 17 is normal to surfaces 18e and 18f. Replicating RVE 10 along one or more axis of coordinate system 17 will produce a component defined by an array or assembly of a plurality of representative volume elements 10, adjacent elements having abutting boundary faces. Dividing structures of adjacent representative volume elements 10 form continuous dividing structures through the component, regions 14 and 16 communicating with corresponding regions 14 and 16 of adjacent RVEs 10 in order to from continuous and discrete flow paths through the component.

While the depicted dividing structure 12 is derived from the Schwarz-D surface, dividing structure 12, or any of the other dividing structures disclosed herein, can be based on a different implicit surface expression or an explicit surface expression. For instance, dividing structure 12 can be based on a Schoen-G, Schwarz-P, or Schoen-IWP surfaces, among other possible minimal surfaces as well as explicitly defined surfaces of any shape so long as the surface has the required periodic characteristic. The Schwarz-D, Schoen-G, Schwarz-P, and Schoen IWP surfaces are given by equations 1, 2, 3, and 4 below expressed as a mathematical expression that equals zero. These base surfaces, sometimes referred to as zero surfaces, are triply periodic minimal surfaces.

| | | |
|---|---|---|
| Schwarz-D | *cos*(*x*)*cos*(*y*)*cos*(*z*) *- sin*(*x*)*sin*(*y*)*sin*(*z*) *=* 0 | (Equation 1) |
| Schoen-G | *cos*(*x*)*sin*(*y*) *+ cos*(*y*)*sin*(*z*) *+ cos*(*z*)*sin*(*x*) *=* 0 | (Equation 2) |
| Schwarz-P | *cos*(*x*) + *cos*(*y*) + *cos*(*z*) = 0 | (Equation 3) |
| Schoen IWP | 2*cos*(*x*)*cos*(*y*) *+* 2*cos*(*x*)*cos*(*z*) *+* 2*cos*(*y*)*cos*(*z*) *- cos*(2*x*) *- cos*(2*y*) *- cos*(2*z*) *=* 0 | (Equation 4) |

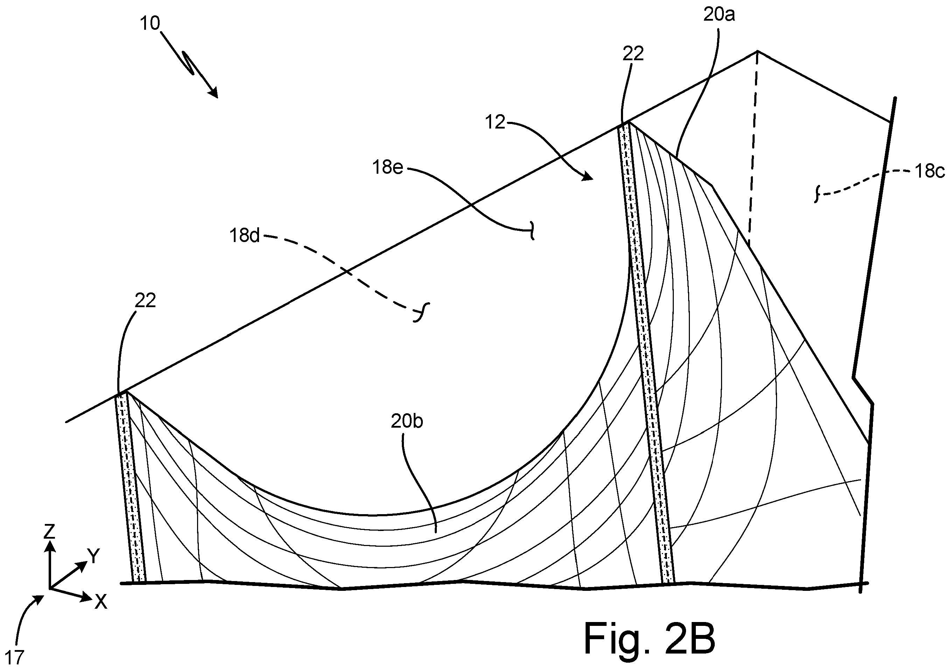

FIG. 2B is an enlarged view of zone A encompassed by the corner of RVE 10 defined by the intersection of boundary faces 18c, 18d, and 18e. Dividing structure 12 is bound by surfaces 20a and 20b. Surface 20a defines region 14, surface 20b defines region 16, and each of surfaces 20a and 20b is offset from parting surface 22 in opposite directions such that each point on surface 20a and each point on surface 20b is offset along a vector normal to corresponding points on parting surface 22. All points along surface 20a are offset by the same amount from parting surface 22, and similarly, all points along surface 20b are offset by the same amount from parting surface 22. Accordingly, surfaces 20a and 20b, and thus dividing structure 12, have a similar shape and a similar contour profile as parting surface 22.

An exemplary process for offsetting surfaces 20a and 20b from parting surface 22, or any other of the surfaces described herein that are offset from respective parting surfaces, is described by U.S. Pat. Serial No. 16/353,206 entitled "METHOD OF CREATING A COMPONENT VIA TRANSFORMATION OF REPRESENTATIVE VOLUME ELEMENTS" and filed on March 14, 2019 with the United States Patent and Trademark Office. In this exemplary process, each parting surface of the representative volume element is mapped into the target, or component domain. For example, the component domain may be a heat exchanger core volume. Subsequently each parting surface is thickened to form a dividing structure (i.e. a solid wall) separating the fluid regions. Bounding surfaces of the dividing structure that are opposite each other along the thickness direction form surfaces offset from the parting surface (e.g., surfaces 20a and 20b). In this way, the thickness of the dividing structure is uniform throughout the representative volume element and, therefore, uniform through the component domain. A similar process can be applied to produce RVEs with additional dividing structures and, hence, components with additional parting walls, as will be described in further detail in subsequently-described embodiments.

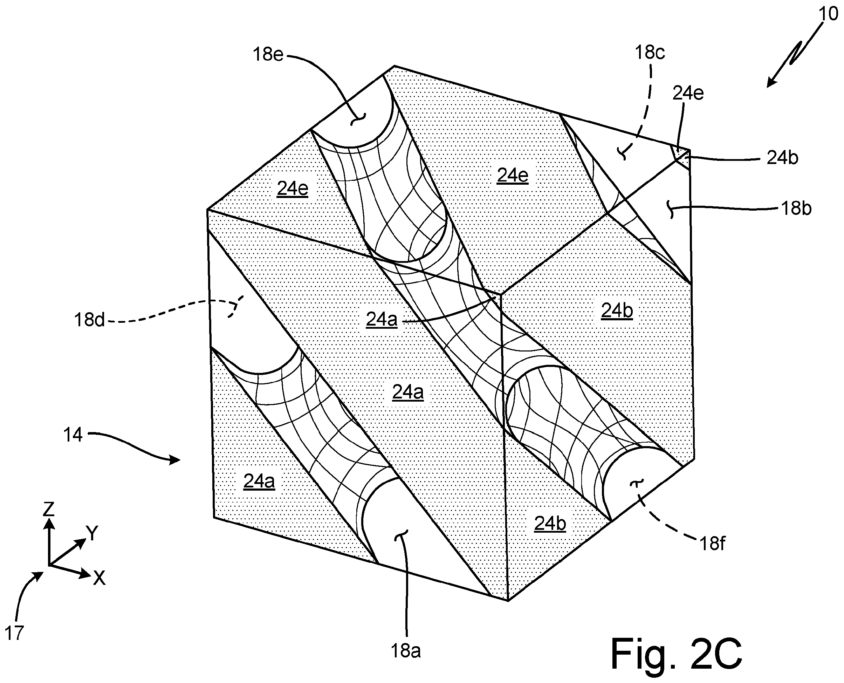

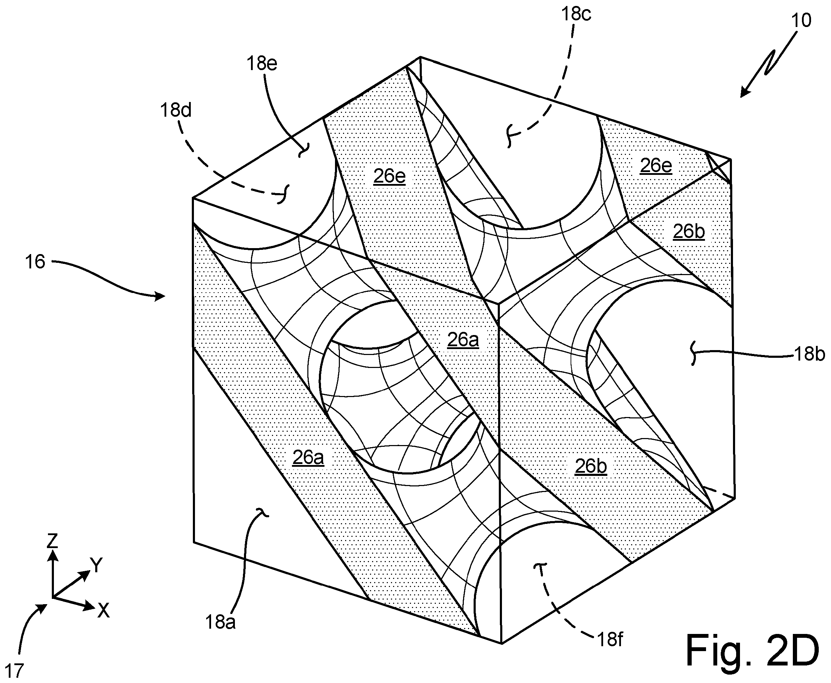

In the embodiment depicted by FIGs. 2A, 2B, 2C, and 2D, parting surface 22 is an implicit surface defined by a mathematical expression that equals a non-zero constant. The mathematical expression selected for parting surface 22 is one that defines a triply periodic minimal surface when the expression equals zero (e.g., a surface defined by one of equations 1, 2, 3, and 4, among other possible triply periodic surfaces). In the example depicted by FIGs 2A and 2B, equation 5 defines parting surface 22 where K is a non-zero constant. When non-zero constant K equals zero, the mathematical expression defines a Schwarz-D surface.

| | | |
|---|---|---|
| Parting Surface 22 | *cos*(*x*)*cos*(*y*)*cos*(*z*) *- sin*(*x*)*sin*(*y*)*sin*(*z*) *= K* | (Equation 5) |

FIGs. 2C and 2D are isometric views of regions 14 and 16, respectively, shown without dividing structure 12. Region 14 intersects boundary faces 18a, 18b, 18c, 18d, 18e, and 18f to define cross-sectional flow areas 24a, 24b, 24c, 24d, 24e, and 24f, respectively, although only areas 24a, 24b, and 24e associated with boundary faces 18a, 18b, and 18e are shown in FIG. 2C. Similarly, region 16 intersects boundary faces 18a, 18b, and 18e to define cross-sectional flow areas 26a, 26b, and 26e shown in FIG. 2D, but also intersects hidden boundary faces 18c, 18d, and 18f to define cross-sectional flow areas 26c, 26d, and 26f not shown in FIG. 2D.

Since the dividing structure 12 is triply periodic, features of dividing structure 12, region 14, and region 16 defined at a boundary face of RVE 10 are identical to corresponding features of dividing structure 12, region 14, and region 16 defined at an opposite boundary face of RVE 10. For example, cross-sectional flow area 24a of region 14 is identical to cross-sectional flow area 24c on hidden face 18c of RVE 10. Similarly, cross-sectional flow areas defined on boundary face 18b are identical to corresponding cross-sectional flow areas on hidden boundary face 18d, and cross-sectional flow areas defined on boundary face 18e are identical to corresponding cross-sectional flow areas on hidden boundary face 18f. Likewise, faces of dividing structure 12 defined at boundary faces 18a-18f are identical to faces of dividing structure defined at an opposite boundary face.

The volume of region 14 is greater than the volume of region 16 as a result of offsetting parting surface 22 from the Schwarz-D base surface via selecting non-zero constant K. Further, as depicted, the cross-sectional flow areas of region 14 defined at boundary faces 18a-18f are greater than cross-sectional flow areas of region 16 defined at corresponding faces. For example, cross-sectional flow area 24a of region 14 is greater than corresponding cross-sectional area 26a of region 16 both defined at boundary face 18a. An area ratio defined at any one of the boundary faces 18a-18f of RVE 10 is equal to the cross-sectional flow area of region 14 divided by the cross-sectional flow area of region 16 defined at the selected boundary face. For instance, the ratio of area 24a divided by area 26a, or the area ratio taken at any of the other boundary faces 18b-18f, is greater than 1.0 as depicted in FIG. 2C and 2D. Accordingly, the cross-sectional flow area of RVE 10 defined at boundary face 18a is biased in favor of region 14 and thus, area 24a of region 14 is greater than area 26a of region 16. Although, by varying the non-zero constant K of equation 5, other embodiments of RVE 10 can be formed in which the ratio of area 24a to area 26a, or the area ratio taken at any of the other boundary faces 18b-18f, can be less than one.

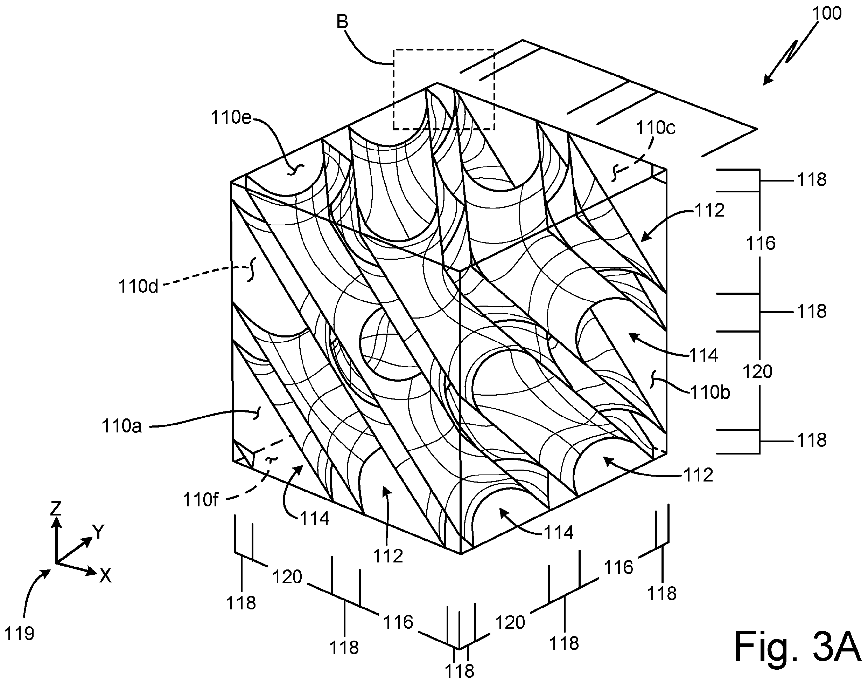

In other embodiments, RVE 10 can include one or more additional dividing structures to divide the volume of RVE 10 into three or more discrete regions. For example, FIG. 3A depicts representative volume element (RVE) 100 enclosed by boundary faces 110a, 110b, 110c, 110d, 110e, and 110f. RVE 100 includes dividing structures 112 and 114, which are offset from a Schwarz-D base surface and spaced from each other to partition RVE 100 into three discrete regions 116, 118, and 120 as indicated along the boundary faces of RVE 100. As shown in FIG. 3A, region 118 is disposed between regions 116 and 120. Further, each of regions 116, 118, and 120 is fluidly isolated from the other regions such that fluid within one region does not communicate with the fluid of the other regions. For instance, fluid supplied to region 116 does not enter region 118 or region 120. Similarly, fluid within region 118 does not fluidly communicate with regions 116 or region 120, and fluid within region 120 does not fluidly communicate with regions 116 and region 118.

Dividing structures 112 and 114 are triply periodic structures such that RVE 100 can be replicated along mutually orthogonal X, Y, and Z axes of coordinate system 119 to form a component. As depicted in FIG. 3A, the X-axis of coordinate system 119 is normal to boundary surfaces 110b and 110d. The Y-axis of coordinate system 119 is normal to boundary surfaces 110a and 110c, and the Z-axis of coordinate system 119 is normal to surfaces 110e and 110f. Replicating RVE 100 along one or more axis of coordinate system 119 will produce a component defined by an array or assembly of a plurality of representative volume elements 100, adjacent elements having abutting boundary faces. Dividing structures of adjacent representative volume elements 100 form continuous dividing structures through the component, regions 116, 118 and 120 communicating with corresponding regions 116, 118, and 120 of adjacent RVEs 100 in order to from continuous and discrete flow paths through the component.

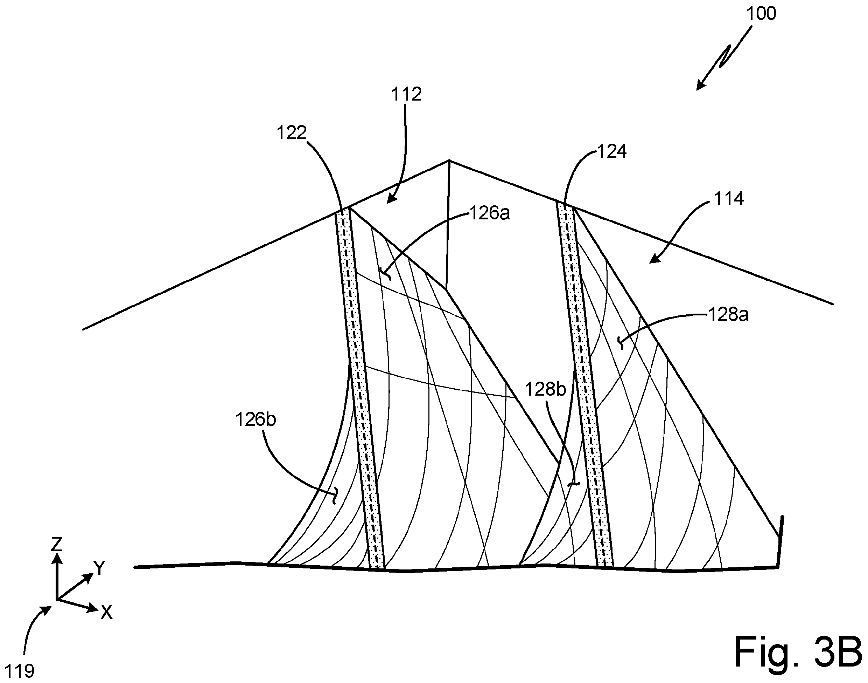

FIG. 3B is an enlarged isometric view of RVE 100 showing the corner formed by the intersection of boundary faces 110c, 110d, and 110e and indicated in FIG. 3A by zone B. Dividing structures 112 and 114 are defined by parting surfaces 122 and 124, respectively, each parting surface 122 and 124 being defined by a mathematical expression that equals non-zero constants M and N, respectively. Like the mathematical expression defining parting surface 22 of RVE 10, the mathematical expression defining each of parting surfaces 122 and 124 also defines a triply periodic minimal surface when constants M and N equal zero. For instance, parting surfaces 122 and 124 shown in FIG. 3B are based on a Schwarz-D surface expressed by equations 6 and 7 below, respectively, and in which M and N are non-zero constants.

| | | |
|---|---|---|
| Parting Surface 122 | *cos*(*x*)*cos*(*y*)*cos*(*z*) *- sin*(*x*)*sin*(*y*)*sin*(*z*) *= M* | (Equation 6) |
| Parting Surface 124 | *cos*(*x*)*cos*(*y*)*cos*(*z*) *- sin*(*x*)*sin*(*y*)*sin*(*z*) *= N* | (Equation 7) |

Parting surfaces 122 and 124 are offset from the Schwarz-D, or zero surface, by a different amount to produce regions 116, 118, and 120 shown in FIG.3A. As depicted by FIGs. 3A and 3B, non-zero constant M does not equal non-zero constant N. In some embodiments, both constants M and N are positive values, or negative values, of different magnitude, offsetting parting surfaces 122 and 124 from the same side of the Schwarz-D surface. In other embodiments, one of constants M and N is positive while the other constant is negative to offset parting surface 122 and 124 from opposite sides of the Schwarz-D surface. For example, in one particular embodiment, constants M and N have opposite sign and equal magnitude to offset parting surfaces 122 and 124 the same amount from opposite sides of the Schwarz-D surface. From these variations, it is evident that constants M and N can be any two non-zero and different values within the domain of the mathematical expression to produce three discrete regions.

Dividing structures 112 and 114 themselves are bound by surfaces offset from opposite sides of each parting surface 122 and 124. For instance, dividing structure 112 is bound by surfaces 126a and 126b. Each point along surfaces 126a and 126b are offset along a vector normal to a corresponding point on parting surface 122, albeit in opposite directions along the normal vector. Similarly, dividing structure 114 is bound by surfaces 128a and 128b in which each point along surfaces 128a and 128b are offset in opposite directions along a vector normal to a corresponding point on parting surface 124. Accordingly, dividing structures 112 and 114 as well as bounding surfaces 126a, 126b, 128a, and 128b have a shape and contour profile that is similar to the triply periodic minimal surface expressed by the mathematical expression, which in the depicted case, is a Schwarz-D surface.

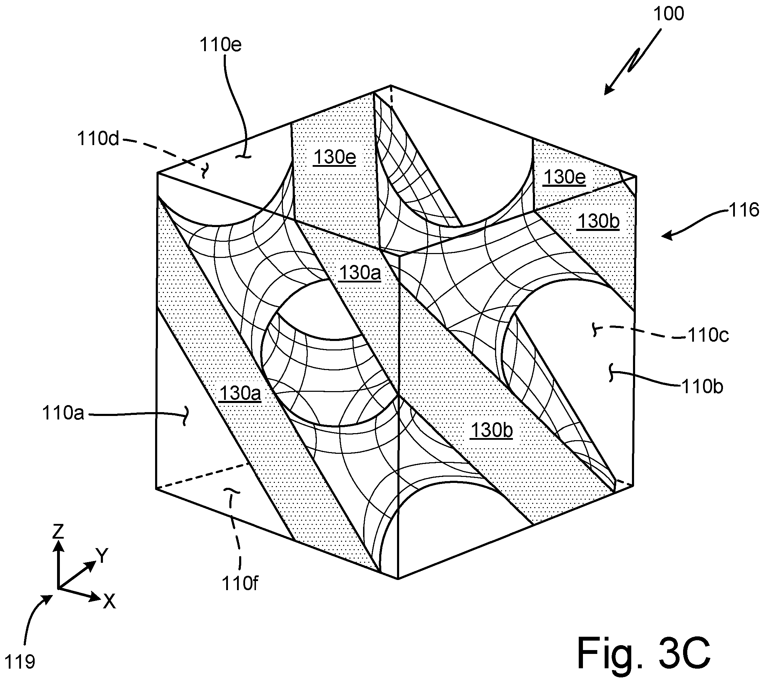

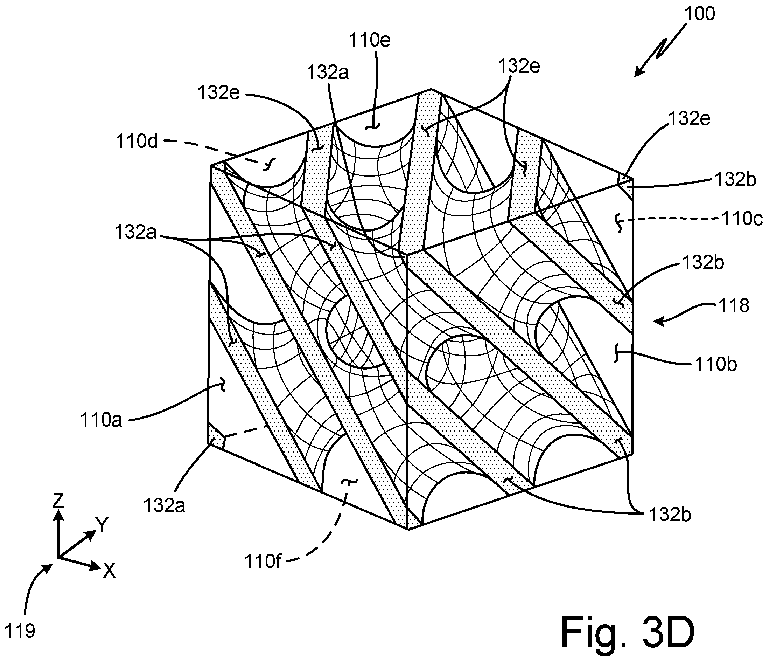

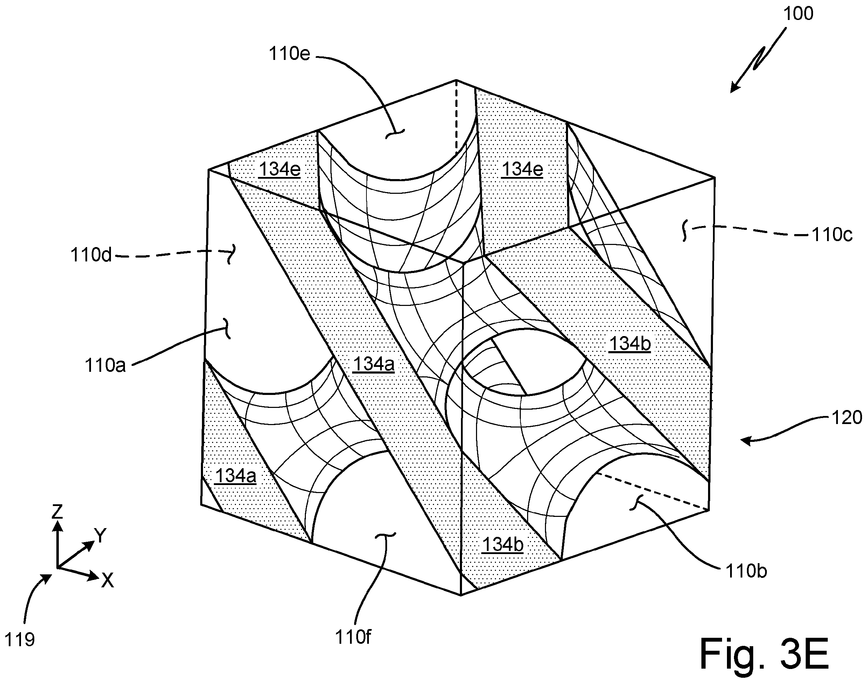

FIGs 3C, 3D, and 3E are isometric views of regions 116, 118, and 120 depicted without dividing structures 112 and 114. Each of regions 116, 118, and 120 intersect boundary faces 110a-f of RVE 100 to form cross-sectional flow areas. For example, region 116 intersects boundary faces 110a, 110b, 110c, 110d, 110e, and 110f to form cross-sectional flow areas 130a, 130b, 130c, 130d, 130e, and 130f of which flow areas 130a, 130b, and 130e are visible in FIG. 3C. Similarly, region 118 intersects boundary faces 110a-f to define cross-sectional flow areas 132a-f, and region 120 intersects boundary faces 110a-f to define cross-sectional flow areas 134a-f of which areas 132a, 132b, and 132e of region 118 are shown in FIG. 3D and areas 134a, 134b, and 134e of region 120 are shown in FIG. 3E.

Dividing structures 112 and 114 are also triply periodic like dividing structure 12 of RVE 10. As such, features of dividing structure 112, dividing structure 114, region 116, region 118, and region 120 defined at a boundary face of RVE 100 are identical to corresponding features of dividing structure 112, dividing structure 114, region 116, region 118, and region 120 defined at an opposite boundary face of RVE 100. For example, cross-sectional flow area 130a of region 116 is identical to cross-sectional flow area 130c on hidden face 110c of RVE 100. Similarly, cross-sectional flow areas defined on boundary face 110b are identical to corresponding cross-sectional flow areas on hidden boundary face 110d, and cross-sectional flow areas defined on boundary face 110e are identical to corresponding cross-sectional flow areas on hidden boundary face 110f. Likewise, faces of dividing structures 112 and 114 defined at boundary faces 110a-110f are identical to faces of respective dividing structures 112 and 114 defined at an opposite boundary face.

Representative volume elements partitioned into three discrete regions by two dividing structures, such as RVE 100, permit the cross-sectional flow area ratio between any two regions to be greater than or less than 1.0 or, in other words, to be biased towards one of the two regions. For applications that fluidly connect regions 116 and 120 to a single fluid source and fluidly connect region 118 to a different fluid source, the cross-sectional flow area ratio at boundary face 110a can be defined as the summation of cross-sectional areas 130a and 134a divided by cross-sectional flow area 132a. The cross-section flow area ratios of RVE 100 can be selected by varying non-zero constants M and N within the domain of the mathematical expression until the desired flow area ratio is achieved. As shown in FIGs. 3A-3E, cross-sectional flow areas of region 116 at each boundary face 110a-110f are approximately equal to corresponding cross-sectional flow areas of region 120. Further, cross-sectional flow areas of region 118 at each boundary face 110a-110f are less than corresponding cross-sectional flow areas of either region 116 or region 120.

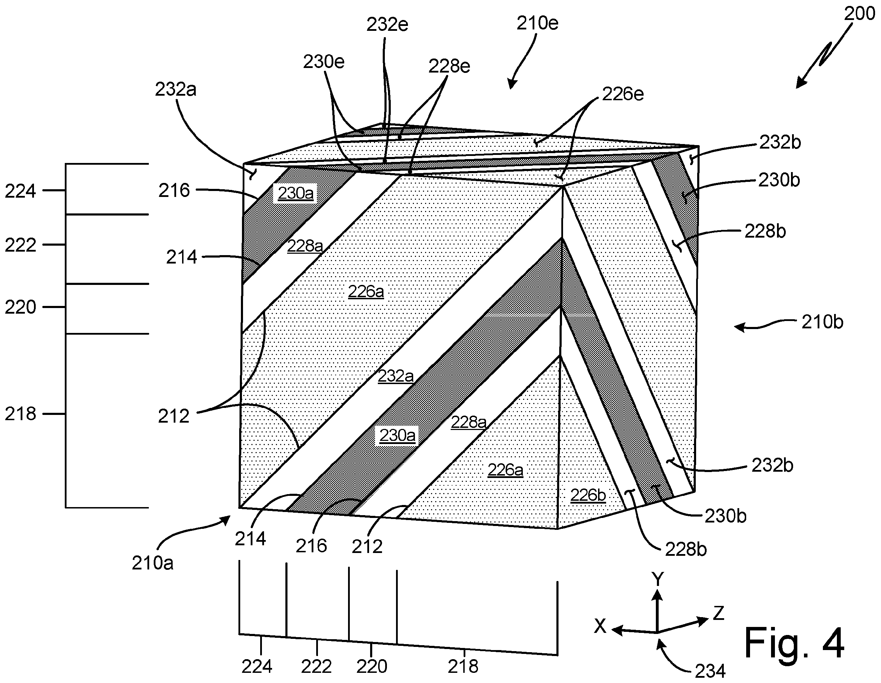

FIG. 4 is a schematic view of the boundary faces of representative volume element (RVE) 200. Dividing structures 212, 214, and 216 partition RVE 200 into four discrete regions 218, 220, 222, and 224. Each of dividing structures 212, 214, and 216 is bound by surfaces offset from opposite sides of respective parting surfaces in the same manner as dividing structures 112 and 114 of RVE 100 and dividing structure 12 of RVE 10. In the example shown in FIG. 4, each parting surface is defined by a mathematical expression that equals first, second, and third non-zero constants and each non-zero constant is different from every other non-zero constant. In the depicted embodiment, the mathematical expression defines a Schwarz-D triply periodic minimal surface when equal to zero. Accordingly, dividing structures 212, 214, and 216 have surfaces that have a similar shape and similar contour profile to the Schwarz-D surface but are offset away from the Schwarz-D within RVE 200.

With this arrangement, regions 218, 220, 222, and 224 intersect boundary faces 110a, 110b, 110c, 110d, 110e, and 110f of RVE 200 to define cross-sectional flow areas. FIG. 4 shows cross-sectional flow areas 226a, 226b, and 226e defined by the intersection of region 218 with boundary faces 110a, 110b, and 110e, respectively. While cross-sectional flow areas 226c, 226d, and 226f are not shown in FIG. 4, it is evident that cross-sectional flow areas 226c, 226d, and 226f are defined by the intersection of region 218 with hidden boundary faces 210c, 210d, and 210f, respectively. Similarly, cross-sectional flow areas 228a-f, 230a-f, and 232a-f are defined by intersections of regions 220, 222, and 224 with boundary faces 210a-f, the letter portion of each cross-sectional area reference number shared with the letter portion of each boundary face reference number. Of these cross-sectional areas, areas 228a, 230a, and 232a are shown on boundary face 210a; areas 228b, 230b, and 232b are shown on boundary face 210b; and areas 228e, 230e, and 232e area shown on boundary face 210e. Like RVE 10 and RVE 100, dividing structures 212, 214, and 216 of RVE 200 are triply periodic and enable replication of RVE 200 along mutually orthogonal X, Y, and Z axes of coordinate system 234 to produce a component comprising a continuous structure defined by a repeating pattern of RVEs 200.

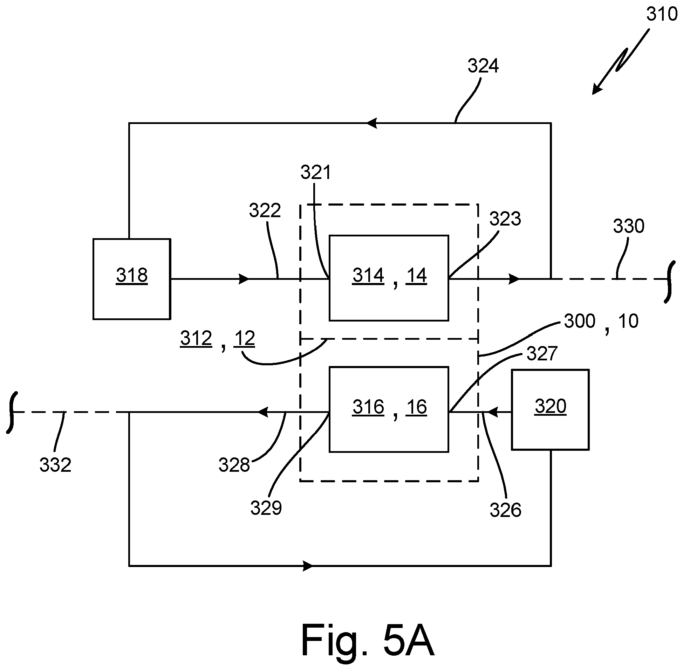

Any of the foregoing representative volume elements as well as other representative volume elements based on a different implicit or explicit surface may be used to form a component comprising a plurality of represent volume elements, and in some embodiments, the component is used to form a heat exchanger core. For example, RVE 10 can be replicated as previously described to create heat exchanger core 300 for use in system 310 schematically depicted by FIG. 5A, falling outside the wording of the claims.

Heat exchanger core 300 includes a plurality of RVEs 10 and consequently, a plurality of dividing structures 12 defining parting wall 312 through which fluid within first fluid path 314 is placed in a heat exchange relationship with another fluid within second fluid path 316. Fluid paths 314 and 316 are defined by parting wall 312 and, more specifically, are formed by a plurality of regions 14 and a plurality of regions 16 interconnected via abutting RVEs 10.

First fluid path 314 is placed in fluid communication with fluid source 318, and second fluid path is placed in fluid communication with fluid source 320, wherein fluid source 318 and fluid source 320 are of different temperature and may be of different material. For example, fluid source 318 may be air while fluid source 320 may be CO₂. Communication between fluid source 318 and inlet 321 of first fluid path 314 is provided with supply line 322 and communication between outlet 323 of first fluid path 314 and fluid source 318 is provided by scavenge line 324. Similarly, supply line 326 fluidly connects source 320 with inlet 327 of second fluid path 316, and scavenge line 328 fluidly connects outlet 329 of second fluid path 316 to fluid source 320.

A first fluid flows from source 318 to first fluid path 314 of heat exchanger core 300 via supply line 322 and returns to fluid source 318 from first fluid path 314 via scavenge line 324. Similarly, a second fluid flows from source 320 to second fluid path 316 of heat exchanger core 300 via supply line 326 and returns to fluid source 320 from second fluid path 316 via scavenge line 328. With this configuration, thermal energy stored within the first fluid flowing through first fluid path 314 can be discharged to the second fluid flowing within second fluid path 316 through parting wall 312. It is understood that thermal energy may be passed from either the first fluid to the second fluid, or from the second fluid to the first fluid, depending on the relative temperatures of each fluid.

As indicated by the flow arrows shown in FIG. 5A, the heat exchanger core has a crossflow configuration. However, other heat exchanger configurations could be used, for example, a parallel-flow arrangement could be formed by reversing the connections of supply line 326 and scavenge line 328 to second fluid path 316. Additionally, FIG. 5A depicts a simplified and schematic depiction of fluid flows through heat exchanger core 300 as implemented in a closed loop system. An open-loop system is also possible whereby fluid does not return to fluid source 318 and fluid source 320 and, instead, flows through discharge lines 330 and 332, respectively. It shall be understood that systems implementing heat exchanger core 300 shall include one or more of pumps, valves, filters, accumulators, or other components common to heat exchanger systems, but are not shown in FIG. 5A, to facilitate operation of the system.

Further, because dividing structure 12 of RVE 10, from which parting wall 312 of heat exchanger core 300 is formed, partitions RVE 10 into unequal volumes and unequal cross-sections flow areas, the cross-sectional flow area ratio of first fluid path 314 divided by second fluid path 316 can be greater than or less than 1.0 and can be tailored to a particular application. In a particular example where first fluid source 318 is a liquid and second fluid source 320 is a gas, the ratio of cross-sectional flow area through first path 314 divided by the cross-sectional flow area through second path 316 and taken at a common location can be less than 1.0. Thus, more of the available cross-sectional flow area through heat exchanger core 300 can be apportioned to the gaseous flow path (i.e., second path 316) than to the liquid flow path (i.e., first path 314).

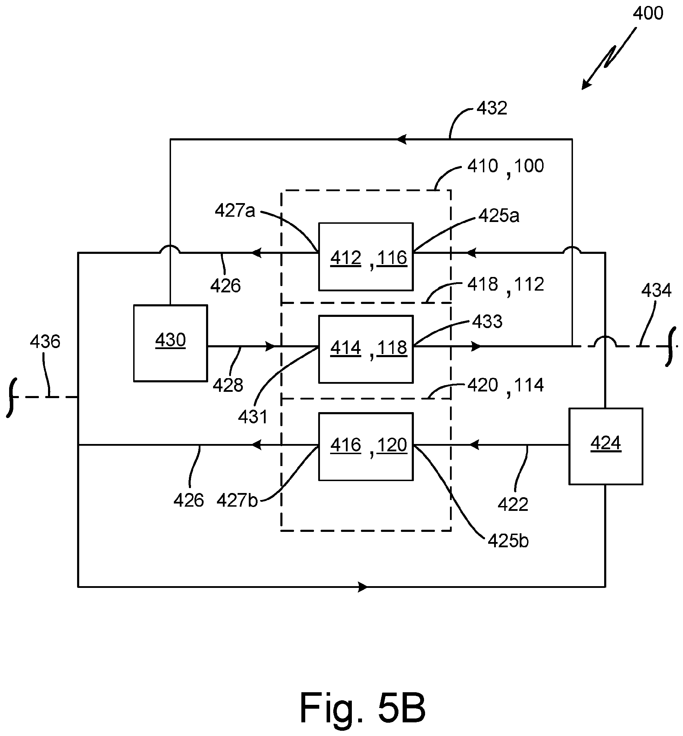

FIG. 5B is a schematic representation of system 400, falling outside the wording of the claims, utilizing heat exchanger core 410 formed by a plurality of RVEs 100 and defining first fluid flow path 412, second fluid flow path 414, and third fluid flow path 416. In the depicted embodiment, a first fluid flowing through first fluid path 412 and third fluid flow path 416 is placed in a heat exchange relationship with a second fluid flowing through second fluid flow path 414 by exchanging heat through parting walls 418 and 420. Supply lines 422 provide fluid communication from fluid source 424 to inlet 425a of first fluid path 412 and to inlet 425b of third fluid path 416. Scavenge lines 426 place outlet 427a of first fluid path 412 and outlet 427b of third fluid path 416 in fluid communication with fluid source 424. Similarly, supply line 428 places fluid source 430 in fluid communication with inlet 431 to second fluid path 414, and scavenge line 432 returns fluid from outlet 433 of second fluid path 414 to fluid source 424.

Each parting wall 418 and 420 is formed by a plurality of dividing structures 112 and a plurality of dividing structures 114, respectively. Likewise, first, second, and third fluid paths 412, 414, and 416 are formed by a plurality of regions 116, 118, and 120, respectively. As such, second fluid path 414 is disposed between first fluid path 412 and third fluid path 416. The cross-sectional flow area ratio between the first fluid flow path and the second fluid flow path can be expressed as the summation of cross-sectional areas of first fluid path 412 and third fluid flow path 416 divided by the cross-sectional area of second fluid path 414, which in the depicted example, is greater than 1.0.

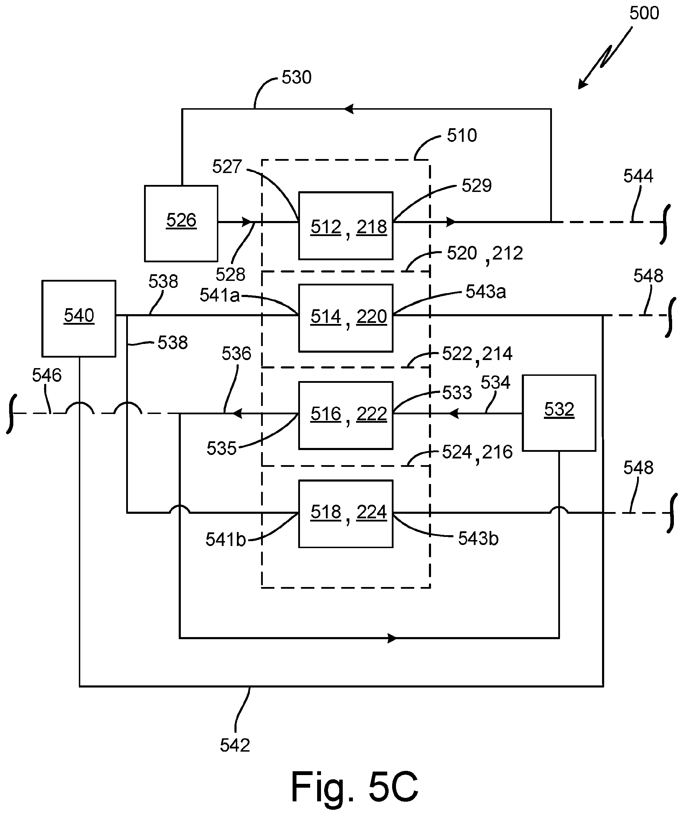

FIG. 5C is schematic representation of system 500 that includes heat exchanger core 510 formed by a plurality of RVEs 200 and defining first, second, third, and fourth fluid paths 512, 514, 516, and 518. Due to the periodic structure of RVE 200, first, second, third, and fourth fluid paths 512, 514, 516, and 518 are formed by pluralities of first, second, third, and fourth regions 218, 220, 222, and 224, respectively. Similarly, parting walls 520, 522, and 524 are defined by pluralities of dividing structures 212, 214, and 216, respectively. As such, parting wall 520 divides first fluid path 512 from second fluid flow path 514 and, when viewed in light of FIG. 4, divides first fluid path 512 from fourth fluid path 518. Parting wall 522 divides second fluid path 514 from third fluid path 516, and parting wall 524 divides third fluid path 516 from fourth fluid path 518.

In the depicted embodiment, fluid flowing through first fluid path 512 is placed in a heat exchange relationship with fluid flowing through third fluid flow path 514. Additionally, second fluid path 514 and fourth fluid path 518 are supplied with an inert gas (e.g., nitrogen or air), or inert fluid. For this purpose, fluid source 526 is placed in fluid communication with inlet 527 of first fluid path 512 via supply line 528 and returns from outlet 529 of first fluid path 512 to fluid source 526 via scavenge line 530. Fluid from fluid source 532 is delivered to inlet 533 of third fluid path 516 via supply line 534 and returns from outlet 535 of third fluid path 526 via scavenge line 536. Supply lines 538 provide inert gas or fluid from source 540 to inlets 541a and 541b of second and fourth fluid paths 514 and 518. Scavenge lines 542 return the inert gas or fluid from outlets 543a and 543b of second and fourth fluid paths 514 and 518 to source 540.

Alternatively, fluid from source 526 and fluid from source 532 are not required to return through scavenge lines 530 and 536 and, instead, may be discharged from the heat exchanger system via lines 544 and 546 as shown. Further, fluid originating from source 540 may stagnate within second and fourth flow paths 514, 518, eliminating the need for scavenge lines 542. Alternatively, fluid from source 540 may be discharged through one or more lines 548 in an open loop arrangement.

With any of the foregoing arrangements of system 500, a volatile or combustible fluid (e.g., fuel) can be separated from another fluid (e.g., lubricating oil). Furthermore, second and fourth fluid paths 514 and 518 can be equipped with sensors to detect leakage of one or both of the first fluid and second fluid into second and fourth fluid paths.

Any of the foregoing components or heat exchanger cores can be manufacturing using additive manufacturing techniques such as selective laser sintering (DLS), direct metal laser sintering (DMLS), and selective laser melting (SLM) techniques, among other additive manufacturing techniques known in the art.

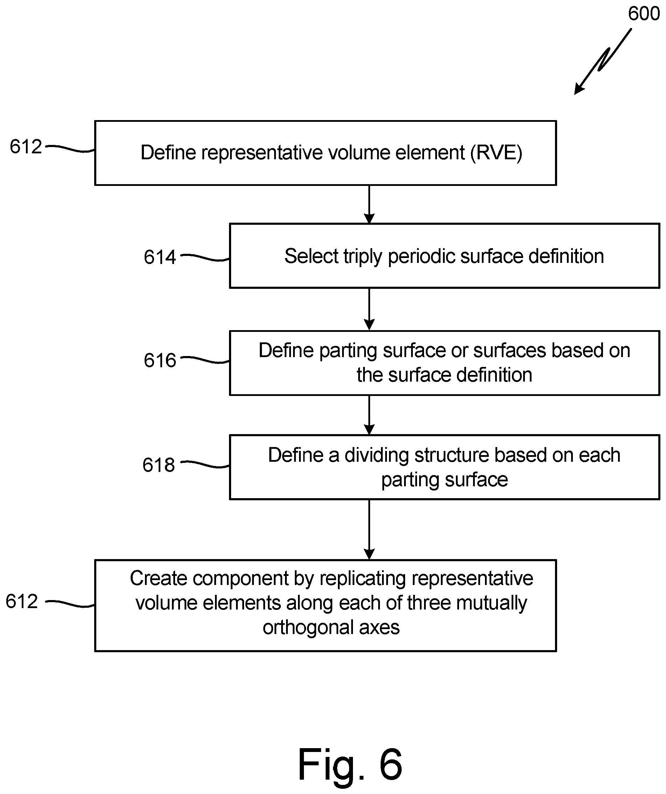

FIG. 6 is a schematic representation of method 600 summarizing steps forming a component comprising a plurality of any one of the foregoing representative volume elements. Method 600 includes defining a representative volume element in step 610 and creating a component by replicating the representative volume element along each of three mutually orthogonal directions in step 612. Defining the representative volume element in step 610 can be further refined by including any one or more of the following steps 614, 616, and 618.

In step 614, a triply periodic surface is selected to define a general shape and contour profile of the dividing structure of the representative volume element. In some embodiments, the surface is a triply periodic minimal surface. In both instances, the periodic surface can be defined by a mathematical expression that defines a surface in three-dimensional space and equals zero, sometimes referred to as a zero surface. When the periodic surface divides the representative volume element into equal volumes and equal cross-sectional areas, a triply periodic minimal surface can be used. Example triply periodic minimal surfaces suitable for this method include the Schwarz D, Schoen-G, Schwarz-P, and Schoen IWP surfaces given by equations 1, 2, 3, and 4, although other triply periodic minimal surfaces could be derived for this purpose.

In step 616, at least one parting surface is defined using the mathematical expression selected during step 614. For example, RVEs 10, 100, and 200 are all based on the Schwarz-D surface given by equation 1. The parting surface is defined by offsetting the Schwarz-D surface, or the zero surface, in the RVE by setting the mathematical expression of a Schwarz-D surface equal to a non-zero constant. If additional parting surfaces are desired, each additional parting surface is defined by setting the same mathematical expression equal to different non-zero constants. The number of parting surfaces and the non-zero constants defining each parting surface can be selected based on the desired area ratio or ratios between cross-sectional flow areas of two regions of the RVE.

The dividing structure associated with each parting surface is defined by thickening the parting surface in step 618. In other words, bounding surfaces of each dividing structure are defined by offsetting points on the parting surface in opposite directions along a vector normal the parting surface such that each point on the bounding surfaces is spaced from the parting surface by the same distance.

Representative volume elements formed in accordance with method 600 have two or more discrete regions of unequal volume and unequal cross-sectional flow areas. Such RVEs facilitate building components with cross-sectional flow area ratios greater than or less than 1.0, and are particularly useful for constructing heat exchanger cores. Such heat exchanger cores provide relatively high surface area available for heat transfer while reducing pressure losses produced by flows through the heat exchanger core and benefiting from the efficiency improvements of heat exchangers with cross-sectional flow area ratios greater than or less than 1.0.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A system (500) comprising:
a heat exchanger core (310) formed by a component, the component comprising:
a plurality of representative volume elements (200), each representative volume element (RVE) (200) of the plurality of representative volume elements (200) abutting at least one other representative volume element (200) of the plurality of representative volume elements (200) and each representative volume element (200) of the plurality of representative volume elements (200) comprising:
a first parting surface (22; 122) defined by a mathematical expression that equals a non-zero first constant, wherein a triply periodic surface is defined by the mathematical expression equaling zero;
a first surface (20a; 126a) defined by the first parting surface (22; 122) offset in a first direction;
a second surface (20b; 126b) defined by the first parting surface (22; 122) offset in a second direction opposite the first direction;
a first dividing structure (212) bound by the first and second surfaces (20a; 126a, 20b; 126b); the system being **characterized by**
a second parting surface (124) defined by the mathematical expression, wherein the mathematical expression equals a non-zero second constant different from the first constant;
a third surface (128a) defined by the second parting surface (124) offset in the first direction;
a fourth surface (128b) defined by the second parting surface (124) offset in the second direction;
a second dividing structure (214) bound by the third and fourth surfaces;
a third parting surface defined by the mathematical expression, wherein the mathematical expression equals a non-zero third constant different from each of the first and second constants;
a fifth surface defined by the third parting surface offset in the first direction;
a sixth surface defined by the third parting surface offset in the second direction; and
a third dividing structure (216) bound by the fifth and sixth surfaces,
wherein the first, second, and third dividing structures (212, 214, 216) partition each of the plurality of representative volume elements (200) into discrete first, second, third, and fourth regions (218, 220, 222, 224),
wherein the second region (220) is disposed between the first and third regions (218, 222), and the fourth region (224) is disposed between the first and third regions (218, 222);
a first fluid source (526) in fluid communication with the first region (218) of at least one of the representative volume elements (200);
a second fluid source (532) in fluid communication with the third region (222) of the at least one of the plurality of representative volume elements (200); and
a third fluid source (540) in fluid communication with the second and fourth regions (220, 224) of the at least one of the plurality of representative volume elements (200);
wherein the first, second, third, and fourth regions (218, 220, 222, 224) intersect a boundary face (210a-210f) of each of the plurality of representative volume elements (200) to define first, second, third, and fourth cross-sectional areas (226a-226f, 228a-228f, 230a-230f, 232a-232f), respectively; and
wherein an area ratio equal to the first cross-sectional area (226a-226f) divided by the third cross-sectional (230a-230f) area is greater than or less than 1.0.

2. The system (500) of claim 1, wherein each of the first and second constants are positive values or negative values.

3. The system (500) of claim 1 or 2, wherein one of the first and second constants is a positive value and the other one of the first and second constants is a negative value, and wherein the first and second constants have the same magnitude.

4. The system (500) of any preceding claim, wherein the second cross-sectional area (228a-228f) is equal to the fourth cross-sectional area (232a-232f); and
wherein the second and fourth cross-sectional areas (228a-228f, 232a-232f) are less than each of the first and third cross-sectional areas (226a-226f, 230a-230f).

5. The system (500) of any preceding claim, wherein the triply periodic surface defined when the mathematical expression equals zero is one of a Schwarz-D surface, a Schoen-G surface, a Schwarz-P surface, and a Schoen-IWP surface.

## Patentansprüche

1. System (500), umfassend:
einen Wärmetauscherkern (310), der durch eine Komponente ausgebildet ist, wobei die Komponente Folgendes umfasst:
eine Vielzahl von repräsentativen Volumenelementen (200), wobei jedes repräsentative Volumenelement (RVE) (200) der Vielzahl von repräsentativen Volumenelementen (200) an mindestens ein anderes repräsentatives Volumenelement (200) der Vielzahl von repräsentativen Volumenelementen (200) angrenzt und jedes repräsentative Volumenelement (200) der Vielzahl von repräsentativen Volumenelementen (200) Folgendes umfasst:
eine erste Trennfläche (22; 122), die durch einen mathematischen Ausdruck definiert ist, der gleich einer ersten Konstanten ungleich Null ist, wobei eine tripelperiodische Fläche durch den mathematischen Ausdruck definiert ist, der gleich Null ist;
eine erste Fläche (20a; 126a), die durch die erste Trennfläche (22; 122) definiert ist, die in einer ersten Richtung versetzt ist;
eine zweite Fläche (20b; 126b), die durch die erste Trennfläche (22; 122) definiert ist, die in einer zweiten Richtung entgegengesetzt zu der ersten Richtung versetzt ist;
eine erste Teilstruktur (212), die durch die erste und zweite Fläche (20a; 126a, 20b; 126b) begrenzt ist; wobei das System **gekennzeichnet ist durch**
eine zweite Trennfläche (124), die durch den mathematischen Ausdruck definiert ist, wobei der mathematische Ausdruck gleich einer zweiten Konstante ungleich Null ist, die sich von der ersten Konstante unterscheidet;
eine dritte Fläche (128a), die durch die zweite Trennfläche (124) definiert ist, die in der ersten Richtung versetzt ist;
eine vierte Fläche (128b), die durch die zweite Trennfläche (124) definiert ist, die in der zweiten Richtung versetzt ist;
eine zweite Teilstruktur (214), die durch die dritte und die vierte Fläche begrenzt ist;
eine dritte Trennfläche, die durch den mathematischen Ausdruck definiert ist, wobei der mathematische Ausdruck gleich einer dritten Konstante ungleich Null ist, die sich von jeder von der ersten und der zweiten Konstante unterscheidet;
eine fünfte Fläche, die durch die dritte Trennfläche definiert ist, die in der ersten Richtung versetzt ist;
eine sechste Fläche, die durch die dritte Trennfläche definiert ist, die in der zweiten Richtung versetzt ist; und
eine dritte Teilstruktur (216), die durch die fünfte und sechste Fläche begrenzt ist,
wobei die erste, die zweite und die dritte Teilstruktur (212, 214, 216) jedes der Vielzahl von repräsentativen Volumenelemente (200) in einen einzelnen ersten, zweiten, dritten und vierten Bereich (218, 220, 222, 224) unterteilen,
wobei der zweite Bereich (220) zwischen dem ersten und dem dritten Bereich (218, 222) angeordnet ist und der vierte Bereich (224) zwischen dem ersten und dem dritten Bereich (218, 222) angeordnet ist;
eine erste Fluidquelle (526), die mit dem ersten Bereich (218) mindestens eines der repräsentativen Volumenelemente (200) in Fluidverbindung steht;
eine zweite Fluidquelle (532), die mit dem dritten Bereich (222) des mindestens einen der Vielzahl von repräsentativen Volumenelementen (200) in Fluidverbindung steht; und
eine dritte Fluidquelle (540), die mit dem zweiten und dem vierten Bereich (220, 224) des mindestens einen der Vielzahl von repräsentativen Volumenelementen (200) in Fluidverbindung steht;
wobei der erste, der zweite, der dritte und der vierte Bereich (218, 220, 222, 224) eine Begrenzungsfläche (210a-210f) jedes der Vielzahl von repräsentativen Volumenelementen (200) schneiden, um eine erste, zweite, dritte beziehungsweise vierte Querschnittsfläche (226a-226f, 228a-228f, 230a-230f, 232a-232f) zu definieren; und
wobei ein Flächenverhältnis gleich der ersten Querschnittsfläche (226a-226f) geteilt durch die dritte Querschnittsfläche (230a-230f) größer oder kleiner als 1,0 ist.

2. System (500) nach Anspruch 1, wobei jede von der ersten und der zweiten Konstante positive oder negative Werte aufweist.

3. System (500) nach Anspruch 1 oder 2, wobei eine von der ersten und der zweiten Konstante einen positiven Wert aufweist und die andere von der ersten und der zweiten Konstante einen negativen Wert aufweist und wobei die erste und die zweite Konstante dieselbe Größe aufweisen.

4. System (500) nach einem der vorhergehenden Ansprüche, wobei die zweite Querschnittsfläche (228a-228f) gleich der vierten Querschnittsfläche (232a-232f) ist; und
wobei die zweite und die vierte Querschnittsfläche (228a-228f, 232a-232f) kleiner sind als jede von der ersten und der dritten Querschnittsfläche (226a-226f, 230a-230f).

5. System (500) nach einem der vorhergehenden Ansprüche, wobei die tripelperiodische Fläche, die definiert ist, wenn der mathematische Ausdruck gleich Null ist, eine von einer Schwarz-D-Fläche, einer Schoen-G-Fläche, einer Schwarz-P-Fläche oder eine Schoen-IWP-Fläche ist.

## Revendications

1. Système (500) comprenant :
un noyau d'échangeur de chaleur (310) formé par un composant, ce composant comprenant :
une pluralité d'éléments de volume représentatifs (200), chaque élément de volume représentatif (RVE) (200) de la pluralité d'éléments de volume représentatifs (200) étant en butée contre au moins un autre élément de volume représentatif (200) de la pluralité d'éléments de volume représentatifs (200), et chaque élément de volume représentatif (200) de la pluralité d'éléments de volume représentatifs (200) comprenant :
une première surface de séparation (22 ; 122) définie par une expression mathématique égale à une première constante non nulle, dans lequel une surface triplement périodique est définie par l'expression mathématique égale à zéro ;
une première surface (20a ; 126a) définie par la première surface de séparation (22 ; 122) décalée dans une première direction ;
une deuxième surface (20b ; 126b) définie par la première surface de séparation (22 ; 122) décalée dans une seconde direction opposée à la première direction ;
une première structure de division (212) délimitée par les première et deuxième surfaces (20a ; 126a, 20b ; 126b) ; le système étant **caractérisé par**
une deuxième surface de séparation (124) définie par l'expression mathématique, dans lequel l'expression mathématique est égale à une deuxième constante non nulle différente de la première constante ;
une troisième surface (128a) définie par la deuxième surface de séparation (124) décalée dans la première direction ;
une quatrième surface (128b) définie par la deuxième surface de séparation (124) décalée dans la seconde direction ;
une deuxième structure de division (214) délimitée par les troisième et quatrième surfaces ;
une troisième surface de séparation définie par l'expression mathématique, dans lequel l'expression mathématique est égale à une troisième constante non nulle différente de chacune des première et deuxième constantes ;
une cinquième surface définie par la troisième surface de séparation décalée dans la première direction ;
une sixième surface définie par la troisième surface de séparation décalée dans la seconde direction ; et
une troisième structure de division (216) délimitée par les cinquième et sixième surfaces,
dans lequel les première, deuxième et troisième structures de division (212, 214, 216) séparent chacun de la pluralité d'éléments de volume représentatifs (200) en première, deuxième, troisième et quatrième régions discrètes (218, 220, 222, 224),
dans lequel la deuxième région (220) est disposée entre les première et troisième régions (218, 222), et la quatrième région (224) est disposée entre les première et troisième régions (218, 222) ;
une première source de fluide (526) en communication de fluide avec la première région (218) d'au moins l'un des éléments de volume représentatifs (200) ;
une deuxième source de fluide (532) en communication de fluide avec la troisième région (222) de l'au moins un de la pluralité d'éléments de volume représentatifs (200) ; et
une troisième source de fluide (540) en communication de fluide avec les deuxième et quatrième régions (220, 224) de l'au moins un de la pluralité d'éléments de volume représentatifs (200) ;
dans lequel les première, deuxième, troisième et quatrième régions (218, 220, 222, 224) croisent une face limite (210a-210f) de chacun de la pluralité d'éléments de volume représentatifs (200) pour définir des première, deuxième, troisième et quatrième aires en section transversale (226a-226f, 228a-228f, 230a-230f, 232a-232f), respectivement ; et
dans lequel un rapport d'aire égal à la première aire en section transversale (226a-226f) divisée par la troisième aire en section transversale (230a-230f) est supérieur ou inférieur à 1,0.

2. Système (500) selon la revendication 1, dans lequel chacune des première et deuxième constantes est une valeur positive ou une valeur négative.

3. Système (500) selon la revendication 1 ou 2, dans lequel l'une des première et deuxième constantes est une valeur positive et l'autre des première et deuxième constantes est une valeur négative, et dans lequel les première et deuxième constantes ont la même amplitude.

4. Système (500) selon une quelconque revendication précédente, dans lequel la deuxième aire en section transversale (228a-228f) est égale à la quatrième aire en section transversale (232a-232f) ; et
dans lequel les deuxième et quatrième aires en section transversale (228a-228f, 232a-232f) sont inférieures à chacune des première et troisième aires en section transversale (226a-226f, 230a-230f).

5. Système (500) selon une quelconque revendication précédente, dans lequel la surface triplement périodique définie lorsque l'expression mathématique est égale à zéro est l'une d'une surfaces de Schwarz-D, d'une surface de Schoen-G, d'une surface de Schwarz-P et d'une surface de Schoen-IWP.
